# EUROPEAN PATENT APPLICATION

(11) **EP 3 467 494 A1**
(43) Date of publication of application: **10.04.2019**
(21) Application number: 17802878.3
(22) Date of filing: 25.05.2017
(51) Int. Cl.: G01N 30/88, G01N 30/26, G01N 30/32

(54) **LIQUID CHROMATOGRAPHY FILLER**

(30) Priority: 25.05.2016 JP 2016104482
(71) Applicant: Showa Denko K.K., Tokyo 105-8518 (JP)
(72) Inventor: KONDO Hideyuki, Tokyo 105-8518 (JP); KATO Junya, Tokyo 105-8518 (JP); MARUOKA Naoko, Tokyo 105-8518 (JP)
(74) Representative: Strehl Schübel-Hopf & Partner
(86) International application number: PCT/JP2017/019519
(87) International publication number: WO 2017/204292

(57) **Abstract**

A liquid chromatography packing material of the present invention uses crosslinked polymer particles, wherein the volume average particle size of the crosslinked polymer particles is at least 2 µm but not more than 10 µm, the amount of fine particles having a particle size of 1 µm or less among the crosslinked polymer particles is less than 1% by volume, and the identity coefficient in the particle size distribution is not more than 1.15.

## Description

### TECHNICAL FIELD

The present invention relates to a liquid chromatography packing material, a liquid chromatography packed column, and a liquid chromatography analysis method.

Priority is claimed on Japanese Patent Application No. 2016-104482, filed May 25, 2016, the content of which is incorporated herein by reference.

### BACKGROUND ART

In recent years, ultra-high-performance liquid chromatographs, in which improvements in the withstand pressure and the flow velocity resistance of the liquid chromatography has enabled a significant shortening of the analysis time, are becoming more common.

Examples of known packing materials that have been designed for ultra-high-performance liquid chromatographs, and packed columns for use in such chromatographs, include porous packing materials or core-shell structure packing materials based on silica gels of 1 to 5 µm, and methods that use packed columns filled with such packing materials. Various types of packed columns that use these packing materials are commercially available.

On the other hand, size exclusion chromatography analysis methods using a general-purpose high-performance liquid chromatograph, including analysis methods that use porous crosslinked polymer particles such as styrene-divinylbenzene-based crosslinked polymer particles, methacrylate-based crosslinked polymer particles or polyvinyl alcohol-based crosslinked polymer particles as a packing material, with that packing material being used in a packed column, are already widely known (for example, see Non-Patent Document 1). The crosslinked polymer particles can be obtained by polymerizing a crosslinking monomer using a suspension polymerization method. In order to enable elution and separation to be performed in accordance with the molecular weights of the polymer samples that represent the measurement targets, the pore size of the crosslinked polymer particles is controlled by altering the types of monomer and diluent used, the ratios between those components, and the polymerization conditions and the like.

In recent years, size exclusion chromatography analysis methods using analysis columns packed with silica gel-based packing materials that have been optimized for size exclusion chromatography have also been proposed (for example, see Patent Document 1).

Size exclusion chromatography is a technique in which an analysis target material is separated based on the molecular size of the components in solution.

### PRIOR ART LITERATURE

### Patent Document

Patent Document 1: Japanese Translation of PCT International Application, Publication No. 2013-514538

### Non-Patent Document

Non-Patent Document 1: C. S. Wu, Column Handbook for Size Exclusion Chromatography, Academic Press, 1999

### DISCLOSURE OF INVENTION

### Problems to be Solved by the Invention

However, almost all silica gel-based packed columns designed for ultra-high-performance liquid chromatography have been columns designed for reversed-phase chromatography and hydrophilic interaction chromatography applications which mainly target low-molecular weight samples, typified by columns known as ODS columns that contain introduced octadecyl groups. Accordingly, these columns have not been able to be applied to size exclusion chromatography that targets polymer samples having molecular weights of 2,000 or higher, such as industrial polymer materials, polymeric additives and biopolymers.

On the other hand, in size exclusion chromatography analysis methods using general-purpose high-performance liquid chromatographs, the aforementioned crosslinked polymer particles used as packing materials exhibit unsatisfactory column performance in terms of high performance properties and the number of theoretical plates.

Further, the drawbacks of silica gel-based packing materials that have been optimized for size exclusion chromatography include a narrow measurement range for polymer samples. As a result, in those cases where a polymer sample having a broad range of molecular weights is measured, an operation in which a plurality of columns having different molecular weight exclusion limits are linked together has typically been necessary. Further, when the pore size of the particles is increased for use in analyzing polymer samples, the pressure-resistant strength of the particles decreases, resulting in restrictions on the flow rate of the mobile phase.

The present invention has been developed in light of these circumstances. The present invention has an object of providing a liquid chromatography packing material, and particularly a size exclusion chromatography packing material, which uses crosslinked polymer particles that combine the features of crosslinked polymer packing materials, including a broad molecular weight measurement range, favorable chemical stability and a high number of theoretical plates, and also enable high-speed analysis, as well as providing a liquid chromatography packed column, and particularly a size exclusion chromatography packed column, and a liquid chromatography analysis method.

### Means for Solving the Problems

As a result of intensive research aimed at achieving the above object, the inventors of the present invention discovered the following. Namely, the inventors discovered that when crosslinked polymer particles having a volume average particle size of at least 2 µm but not more than 10 µm, having an amount of fine particles with a particle size of 1 µm or less of less than 1% by volume, and having an identity coefficient (75%/25% ratio of the particle total volume) in the particle size distribution of not more than 1.15 were used as a liquid chromatography packing material, then in a packed column and an analysis method using the packing material, and particularly in size exclusion chromatography, a single column could be used in a high-performance liquid chromatograph to analyze, with a high number of theoretical plates, a polymer sample having a broad range of molecular weights, and high-speed analysis was also possible, and they were therefore able to complete the present invention.

In order to achieve the object described above, the present invention provides a first aspect described below.

The first aspect of the present invention is a packing material described below.
(1) A liquid chromatography packing material that uses crosslinked polymer particles, wherein the volume average particle size of the crosslinked polymer particles is at least 2 µm but not more than 10 µm, the amount of fine particles having a particle size of 1 µm or less among the crosslinked polymer particles is less than 1% by volume, and the identity coefficient (75%/25% ratio of the particle total volume) in the particle size distribution is not more than 1.15.
   The above packing material of the first aspect preferably has features (2), (3) or (12) described below. These features may be combined as desired.
(2) The average pore size of the crosslinked polymer particles is at least 1 nm but not more than 60 nm.
(3) The crosslinked polymer particles according to (1) or (2) are composed of a styrene-divinylbenzene copolymer.
   A second aspect of the present invention is a liquid chromatography packed column described below.
(4) A liquid chromatography packed column containing the packing material according to any one of (1) to (3) and (12) wherein the filled is packed in a liquid chromatography housing.
   The above column of the second aspect preferably has a feature (5) described below.
(5) The housing of the liquid chromatography packed column according to (4) has an inner diameter of not more than 8.0 mm and a length of not more than 300 mm.
   A third aspect of the present invention is a liquid chromatography analysis method described below.
(6) A liquid chromatography analysis method that uses the liquid chromatography packed column according to (4) or (5).
   The above liquid chromatography analysis method of the third aspect preferably has features (7) to (11) described below. The method may include these features (7) to (11) individually, or may include a combination of these features.
(7) The separation mode for the liquid chromatography analysis method according to (6) is size exclusion chromatography for analyzing polymer samples.
(8) The separation mode for the liquid chromatography analysis method according to (6) or (7) is size exclusion chromatography, and in the size exclusion chromatography, the molecular weight range of the polymer sample that represents the analysis target is at least 100 but not more than 5,000,000 (polystyrene-equivalent values).
(9) The separation mode for the liquid chromatography analysis method according to any one of (6) to (8) is size exclusion chromatography, and in the size exclusion chromatography, the elution volume of the mobile phase containing the polymer sample (the product of the polymer sample retention time (units: minutes) and the flow rate of the mobile phase (units: ml/minute)) is not more than 2.0 ml per column.
(10) The separation mode for the liquid chromatography analysis method according to any one of (6) to (9) is size exclusion chromatography, and in the size exclusion chromatography, the mobile phase is at least one compound selected from the group consisting of tetrahydrofuran, chloroform, dichloromethane, dimethylformamide, dimethylacetamide, benzene, toluene, p-xylene, o-dichlorobenzene, trichlorobenzene, acetone, methyl ethyl ketone, dimethyl sulfoxide, and N-methylpyrrolidone.
(11) The separation mode for the liquid chromatography analysis method according to any one of (6) to (10) is size exclusion chromatography, and in the size exclusion chromatography, the flow rate of the mobile phase is from 0.3 to 3.0 ml/min.
(12) In the liquid chromatography packing material according to any one of (1) to (3),
   the identity coefficient in the particle size distribution represents
   the ratio of the equivalent circle diameter of the crosslinked polymer particle corresponding with 75% by volume relative to the equivalent circle diameter of the crosslinked polymer particle corresponding with 25% by volume, wherein the ratio is obtained when
   a two-dimensional particle image is obtained by capturing an image of the crosslinked polymer particles using a particle size distribution measurement device,
   the equivalent circle diameter of each particle is obtained from the image,
   the volume of each particle is then calculated from the equivalent circle diameter, and
   all of the crosslinked polymer particles used in the calculation are arranged in order of volume from smallest to largest to obtain the ratio.

### Effects of the Invention

The present invention can provide a liquid chromatography packing material, a liquid chromatography packed column and a liquid chromatography analysis method, which combine the features of a broad molecular weight measurement range and a high number of theoretical plates, and also enable high-speed analysis.

In order to ensure that the crosslinked polymer particles used in the liquid chromatography packing material of the present invention are capable of yielding column performance that is satisfactory even for use in ultra-high-performance liquid chromatographs, the average particle size of the crosslinked polymer particles and the amount of fine particles in the crosslinked polymer particles are controlled. An example of the column performance is the number of theoretical plates (half-value width method, N), wherein N can be calculated using the formula: N = 5.54 × (peak elution time / peak width at 50% of peak height)² (Japanese Pharmacopoeia).

### BRIEF DESCRIPTION OF THE DRAWINGS

FIG. 1 is an example of a calibration curve for a polymer sample.
FIG. 2 illustrates chromatograms (overwritten) showing the results of measuring seven polystyrene standards at a flow rate of 1.5 ml/min using a packed column of Example 5.
FIG. 3 is a calibration curve for Example 5.

### EMBODIMENTS FOR CARRYING OUT THE INVENTION

Compositions of the liquid chromatography packing material, the liquid chromatography packed column and the liquid chromatography analysis method according to the present invention are described below. The present invention is not limited to the specific compositions described below, and appropriate alterations can be made provided the effects of the present invention are retained. Further, the following examples present specific descriptions in order to facilitate better comprehension of the objects of the present invention, but unless specifically stated otherwise, these examples do not limit the scope of the present invention. Alterations, omissions and additions may be made in relation to numerical values, types, sizes, and properties and the like, provided they do not depart from the scope of the present invention. Further, provided no problems arise, the various features and preferred examples may also be combined.

The liquid chromatography packing material of the present invention is a packing material that uses crosslinked polymer particles, wherein the volume average particle size of the crosslinked polymer particles is at least 2 µm but not more than 10 µm, the amount of fine particles having a particle size of 1 µm or less among the crosslinked polymer particles is less than 1% by volume, and the identity coefficient (75%/25% ratio of the particle total volume) in the particle size distribution is not more than 1.15.

The liquid chromatography packing material of the present invention is preferably composed solely of the above crosslinked polymer particles.

The volume average particle size of the crosslinked polymer particles described in the present description means the particle size described below. Namely, an image is captured of at least 2,000 crosslinked polymer particles using a particle size distribution measurement device, and the equivalent circle diameter (the diameter of a circle having the same surface area as the projected area in the particle image) of each particle is obtained from the thus obtained two-dimensional particle image (preferably a static image). The volume of each particle is calculated from the equivalent circle diameter, and the volume average particle size is the particle size obtained by averaging the particle sizes based on the calculated volumes. At this time, each particle is deemed to be a sphere having a diameter equal to the above equivalent circle diameter. Measurement of at least 2,000 particles is deemed to represent a sufficient number of measurements to obtain an average value. Specific examples of the actual number of measurements may be 6,500 or the like. Furthermore, the above particle size may represent a value measured in a state where the particle is contained within a liquid such as a suspension.

In the present description, the amount of fine particles having a particle size of 1 µm or less refers to the proportion described below. Namely, the volume of each particle is calculated using the same method as described above, these volume values are totaled to calculate a total volume thereof, and within the total volume of all the crosslinked polymer particles, the amount of fine particles is the proportion of the volume of fine particles having an equivalent circle diameter or 1 µm or less relative to the total volume of all the particles.

Furthermore, in the present description, the identity coefficient (75%/25% ratio of the particle total volume) means the ratio of the equivalent circle diameter (75%) of the crosslinked polymer particle corresponding with 75% by volume relative to the equivalent circle diameter (25%) of the crosslinked polymer particle corresponding with 25% by volume, when the volume of each particle is calculated using the same method as described above, and all of the crosslinked polymer particles used in the calculation are arranged in order of volume from smallest to largest. In other words, the identity coefficient is the value represented by (the particle size at which the abundance ratio of particles equal to or lower than that particle size is 75% by volume) / (the particle size at which the abundance ratio of particles equal to or lower than that particle size is 25% by volume).

The average particle size of the crosslinked polymer particles and the amount of fine particles can be measured using a particle size distribution measurement device in the manner described above. In order to obtain satisfactory column performance, the average particle size of the crosslinked polymer particles is typically at least 2.0 µm but not more than 10.0 µm, preferably at least 2.0 µm but not more than 7.0 µm, and more preferably at least 2.0 µm but not more than 5.0 µm. Provided the average particle size is at least 2.0 µm, any increase in column pressure can be more easily avoided. Further, if the average particle size exceeds 10 µm, then the column performance tends to deteriorate.

Further, in terms of the amount of fine particles, the amount of fine particles of 1 µm or less is typically less than 1% by volume, and the amount of particles of 1 µm or less is more preferably 0.5% by volume or less. Provided the amount of particles of 1 µm or less is less than 1% by volume, difficulty of dense packing of the column due to pressure increases can be avoided, and furthermore, the number of theoretical plates is favorable, and high-speed analysis becomes possible.

Further, the particle size of the crosslinked polymer particles has excellent uniformity. The uniformity can be expressed, for example, by the identity coefficient (volume-based). The identity coefficient (volume-based) is calculated using the method described above. The identity coefficient (volume-based) of the crosslinked polymer particles according to the present invention is not more than 1.15, and is preferably 1.10 or less. Provided the identity coefficient is not more than 1.15, any deterioration in the column performance can be prevented. By definition, the lower limit for the identity coefficient is 1.00.

When the liquid chromatography packing material of the present invention is used in size exclusion chromatography, the pore size of the crosslinked polymer particles influences the separation of the polymer sample. The pore size of the crosslinked polymer particles can be controlled by the types, amounts and concentrations and the like of the monomers and diluents used at the time of polymerization.

The average pore size of the crosslinked polymer particles in the present invention varies depending on the molecular weight range of the polymer sample being measured, but the average pore size is preferably at least 1 nm but not more than 60 nm, and more preferably at least 5 nm but not more than 50 nm. Provided the average pore size is at least 1 nm, a size exclusion effect with the packing material is achieved regardless of the molecular weight range of the polymer sample, whereas provided the average pore size is not more than 60 nm, deterioration in the physical strength of the packing material can be avoided.

Depending on the molecular weight range of the polymer sample being measured, a single type of the above crosslinked polymer particles may be used, or a mixture of two or more types may be used.

Further, in the present description, the average pore size means the value determined by performing a nitrogen adsorption measurement, and then determining the average pore size from the nitrogen adsorption isotherm using the BJH method. More specifically, the nitrogen adsorption measurement is performed using 0.2 g of the crosslinked polymer particles, and the volume-average pore size is calculated.

Provided the crosslinked polymer particles used in the liquid chromatography packing material of the present invention are composed of a material that can be used in liquid chromatography, there are no particular limitations on the type of crosslinked polymer particles used. However, the particles are preferably chemically and physically stable, and undergo no decomposition or degeneration in the presence of various solvents, and also preferably have good mechanical strength stability relative to pressure.

For example, crosslinked polymer particles obtained by polymerizing at least one type of crosslinking monomer, or crosslinked polymer particles obtained by copolymerizing at least one type of crosslinking monomer and at least one type of non-crosslinking monomer may be used as the crosslinked polymer particles in the present invention. Examples of the crosslinking monomer include polyethylene glycol di(meth)acrylates, polypropylene glycol di(meth)acrylates, alkylene glycol di(meth)acrylates, hydroxyalkyl di(meth)acrylates, alkylolalkane (meth)acrylates having at least two (meth)acrylic groups in the molecule, and aromatic crosslinking monomers. Examples of the non-crosslinking monomer include alkyl (meth)acrylates and aromatic non-crosslinking monomers.

Specifically, styrene-divinylbenzene copolymer particles, crosslinked polyhydroxy (meth)acrylate particles, and crosslinked polyvinyl alcohol particles and the like may be used. In order to ensure favorable chemical, physical and mechanical strength stability during high-speed analysis by size exclusion chromatography, and also obtain satisfactory column performance, styrene-divinylbenzene copolymer particles can be used particularly favorably.

There are no particular limitations on the polymerization method (formation method) for the crosslinked polymer particles used in the present invention. For example, besides suspension polymerization methods, polymerization can also be performed by an SPG membrane emulsion polymerization method using a Shirasu porous glass (SPG) membrane having a controlled pore size and an internal pressure micro kit MN-20 (manufactured by SPG Technology Co., Ltd.), or a microchannel emulsion polymerization method using a microchannel emulsification device (manufactured by EP Tech Co., Ltd.). The conditions used during the PG membrane emulsion polymerization method or microchannel emulsion polymerization method or the like may be selected as desired. For example, emulsification may be performed by using a membrane or substrate in which a plurality of the prescribed pores have been formed, passing an oil phase through the membrane or substrate, and following passage through the membrane or substrate, obtaining liquid droplets within the liquid used for dispersion. In this case, the various conditions associated with the membrane or substrate, such as the pore size and the like, may be selected as desired. In this type of emulsion polymerization, if not required, the type of powerful mechanical stirring used in typical emulsion polymerization need not be performed. Further, following the emulsification, the liquid droplets of substantially uniform size that are obtained may be subjected to an optional heat treatment or the like. However, the present invention is not limited to only the methods and devices mentioned in the above examples.

Furthermore, following polymerization, classification may be performed using a sieve or a classification device (for example, a semi-free vortex-type classifier Aerofine Classifier AC (manufactured by Nisshin Engineering eptec Inc.)), thus enabling the average particle size, the particle uniformity and the amount of fine particles to be adjusted.

In relation to the crosslinked polymer particles used in the present invention, the oil layer (oil phase, the mixed solution of the monomer and the diluent), the dispersant and the polymerization initiator used during the polymerization are not particularly limited, and may be selected as desired, provided no particular problems arise. The monomers used in the oil layer are monomers that correspond with the crosslinked polymer particles that are to be produced. For example, when producing styrene-divinylbenzene copolymer particles, examples of styrene-based monomers that can be used include styrene, 2-methylstyrene, 3-methylstyrene, 4-methylstyrene, 2,4-dimethylstyrene, 2,5-dimethylstyrene, 3,5-dimethylstyrene, and 2,4,6-trimethylstyrene. Further, examples of divinylbenzene monomers that can be used include o-divinylbenzene, m-divinylbenzene and p-divinylbenzene. The polymerization ratio between the styrene-based monomer and the divinylbenzene monomer may be controlled as desired. In order to obtain satisfactory strength and performance for the particles to enable the particles to be used favorably in size exclusion chromatography applications, the proportion of the styrene-based monomer is preferably at least 30% by mass but not more than 70% by mass, more preferably at least 40% by mass but not more than 70% by mass, and even more preferably 50 to 65% by mass. Provided the proportion of the styrene-based monomer is at least 30% by mass but not more than 70% by mass, satisfactory strength and performance can be achieved in size exclusion chromatography applications.

Further, there are no particular limitations on the diluent that is used for diluting the monomer in the oil layer. For example, organic solvents such as toluene, ethylbenzene, o-xylene, chlorobenzene, hexane, cyclohexane and isooctane can be used. By adjusting the difference in affinity and the ratio between the diluent and the monomer when preparing the oil layer, the pore size of the crosslinked polymer particles can be controlled.

An aqueous solution of a surfactant can be used favorably for the dispersant used in dispersing the liquid droplets that form the particles in the polymerization. In the present invention, an aqueous solution of a polyvinyl alcohol can be used particularly favorably. The concentration of the surfactant in the dispersant and the amount added of the dispersant can influence the yield and particle size distribution and the like of the crosslinked polymer particles.

There are no particular limitations on the type of polymerization initiator used. For example, radical initiators such as azo-based polymerization initiators (such as 2,2'-azobisisobutyronitrile (AIBN) and 2,2'-azobis(2,4-dimethylvaleronitrile)) and organic peroxides (such as benzoyl peroxide and tert-butyl hydroperoxide) can be used favorably.

The liquid chromatography packed column of the present invention can use a column prepared by packing the crosslinked polymer particles in which the average particle size and the amount of fine particles have been controlled into a liquid chromatography housing. There are no limitations on the material for the liquid chromatography housing. In order to achieve chemical stability relative to various solvents and sufficient pressure resistance for high-speed analysis, a stainless steel tube or PEEK tube is preferably used, and the use of a stainless steel tube is particularly preferred. A stainless steel tube in which the inner surface has been coated with an organic polymer may also be used.

Further, the withstand pressure of the housing is preferably at least 40 MPa, more preferably at least 60 MPa, and even more preferably 75 MPa or greater.

There are no limitations on the size of the liquid chromatography housing in the present invention. In order to obtain satisfactory column performance during high-speed analysis, the inner diameter is preferably from 0.5 to 8.0 mm, more preferably from 1.0 to 6.0 mm, and particularly preferably from 2.0 to 4.6 mm. Provided the inner diameter is at least 0.5 mm, packing of the crosslinked polymer particles does not become difficult. Further, provided the inner diameter is not more than 8.0 mm, satisfactory column performance can be achieved during high-speed analysis.

Further, the length is preferably from 10 to 300 mm, and particularly preferably from 50 to 150 mm. Provided the length is at least 10 mm, the sample being measured can be adequately retained and separated inside the column. Further, provided the length is not more than 300 mm, the elution time for the sample does not become overly long, and the column pressure also does not become too large, meaning the column is suitable for use in high-speed analysis.

The liquid chromatography packing material and the packed column according to the present invention can be used without restriction in typical liquid chromatographs, including ultra-high-performance liquid chromatographs.

Examples of the separation mode in the liquid chromatography include reversed phase chromatography, normal phase chromatography, hydrophilic interaction chromatography, ion exchange chromatography, and size exclusion chromatography. Among these, the present invention can be used particularly favorably in size exclusion chromatography targeting polymer samples having a molecular weight of 2,000 or higher.

Moreover, in the liquid chromatography analysis method of the present invention, polymer samples can be measured in a short period of time. In size exclusion chromatography, the molecular weight of the polymer sample can be measured in accordance with the elution volume (ml), which is calculated as the product of the polymer sample retention time (minutes) and the flow rate of the mobile phase (ml/minute). In the present invention, analysis can be performed favorably under conditions where the elution volume of the polymer sample is not more than 2.0 ml per column.

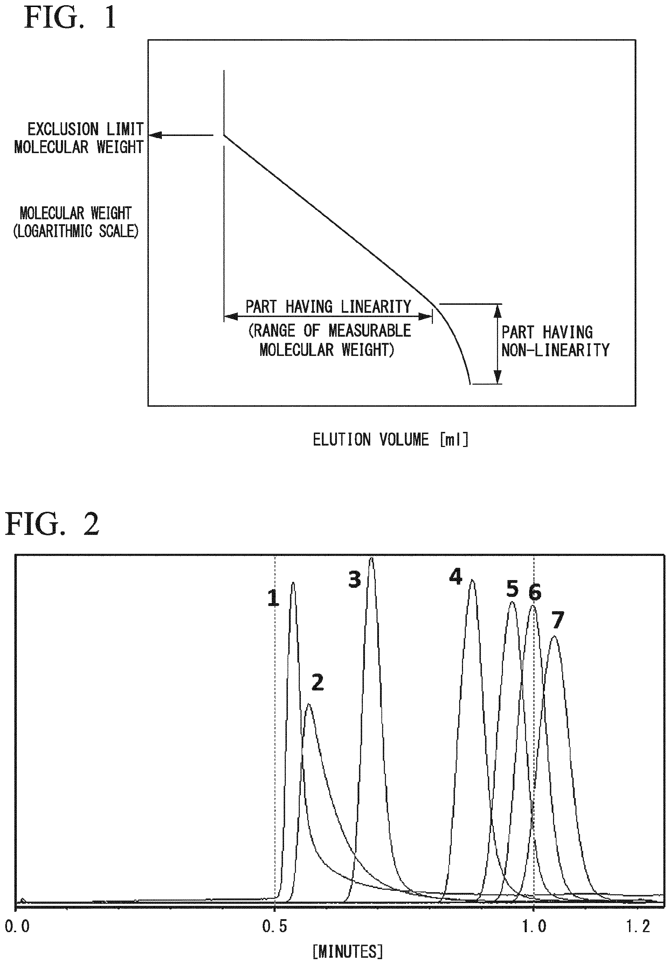

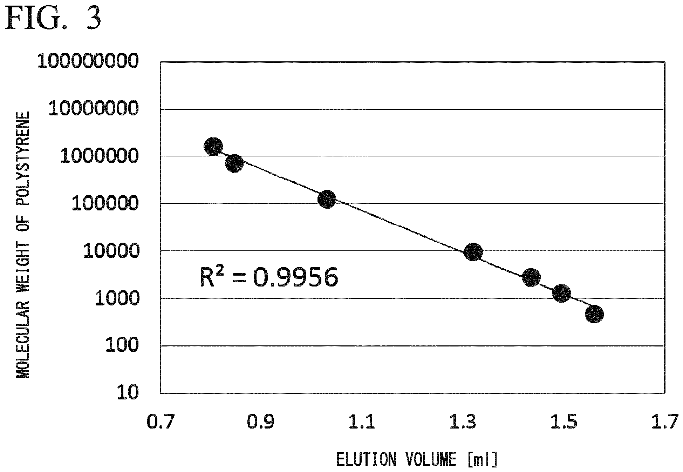

In the liquid chromatography analysis method according to the present invention, the molecular weights of polymer samples having various molecular weights can be measured by size exclusion chromatography. The following method can be used for measuring those molecular weights. First, a calibration curve having the elution volume (ml) along the horizontal axis and a logarithmic scale of the molecular weight along the vertical axis is created using polymer standards of known molecular weights. Using this calibration curve, the molecular weight of a polymer sample of unknown molecular weight can be determined by equivalence to the molecular weights of the polymer standards. The region of the calibration curve having favorably linearity (the square of the correlation coefficient (the square of R)) indicates the molecular weight range of polymer samples that can be analyzed (the range across which molecular weights can be confirmed). The value of the square of R is preferably as close to 1 as possible, and is preferably at least 0.99 (see FIG. 1 and FIG. 3).

In size exclusion chromatography, a packing material having pores is used, and the fact that the degree to which components in the sample are able to enter those pores varies depending on the molecular weight of those components is utilized. In other words, components having a small molecular weight can enter right into the depths of the pores, whereas components having a large molecular weight cannot enter the pores, and components having an intermediate molecular weight can partially enter the pores. Those components that can enter into the depths of the pores have a longer retention time within the column, and therefore the order in which the components are eluted from the column is components of larger molecular weight first, followed by components of intermediate molecular weight, and then components of low molecular weight. In this manner, separation can be achieved in order of the molecular weights of the various components in the sample.

An example of a calibration curve for polymer samples is illustrated in FIG. 1. Those components having a molecular weight that exceeds the molecular weight exclusion limit are all eluted at the same time. The calibration curve includes a part having linearity and a part having non-linearity, and only the part having linearity of the calibration curve can be used for determining a molecular weight distribution. The "exclusion limit molecular weight" is the molecular weight of the smallest component that is unable to enter the pores. Those components having molecular weights exceeding the exclusion limit molecular weight of the column are eluted from the column at the same time, even when there are differences in those molecular weights, and can therefore not be separated.

Examples of the polymer standards of known molecular weights include polystyrenes and the like.

Although dependent on the type (the pore size) of the crosslinked polymer particles, measurement of the molecular weight of a polymer sample using the present invention can typically be performed favorably within a molecular weight range from at least 100 to not more than 5,000,000 (polystyrene-equivalent values), and measurement within the molecular weight range from at least 100 to not more than 2,000,000 can be performed particularly favorably. Provided the molecular weight is not more than 5,000,000, it is possible to prevent the occurrence of the situation that the polymer sample does not enter the pores of the crosslinked polymer particles, and therefore the sample is eluted without any retention within the column. Provided the molecular weight is at least 100, it is possible to prevent the occurrence of the situation that it is unable to achieve linearity in the calibration curve, and therefore it becomes difficult to achieve an accurate measurement of the molecular weight.

The liquid chromatography analysis method of the present invention aimed at high-speed analysis can be used favorably in size exclusion chromatography, and particularly in organic solvent-based size exclusion chromatography (gel permeation chromatography: GPC) that uses any of various organic solvents as the mobile phase.

In organic solvent-based size exclusion chromatography, examples of mobile phase organic solvents that can be used favorably include tetrahydrofuran, chloroform, dichloromethane, dimethylformamide, dimethylacetamide, benzene, toluene, p-xylene, o-dichlorobenzene, trichlorobenzene, acetone, methyl ethyl ketone, dimethyl sulfoxide, and N-methylpyrrolidone. In the present invention, in the liquid chromatography analysis method aimed at high-speed analysis, at least one of the solvents from the above solvent group may be used, and a mixture of two or more solvents may also be used.

In the liquid chromatography analysis method of the present invention, a polymer sample can be analyzed rapidly by size exclusion chromatography. Although a typical flow rate may be used, the flow rate of the mobile phase may also be increased to enable the analysis to be performed more rapidly. In a typical measurement, the flow rate is preferably at least 0.3 ml/min but not more than 3.0 ml/min. When high-speed analysis is performed, the flow rate is preferably at least 0.5 ml/min, more preferably at least 1.1 ml/min, and even more preferably 1.5 ml/min or greater. Further, the upper limit is preferably not more than 3.0 ml/min. Provided the flow rate is not more than 3.0 ml/min, it is possible to prevent the occurrence of the situation that molecular chain cleavage occurs in the polymer sample, and the cleavage makes it impossible to measure accurate molecular weights.

### EXAMPLES

The present invention is described below in further detail using a series of examples, but the present invention is in no way limited by these examples.

In the following examples, for the crosslinked polymer particles, the amount of fine particles having a particle size of 1 µm or less, the volume average particle size, and the identity coefficient (all volume-based values) represent values obtained based on the methods described above using a flow-type particle image analyzer FPIA-3000 (a product name, manufactured by Sysmex Corporation). The number of measured particles was about 6,500. The pore size represents a value obtained based on the measurement method described above (the BJH method) using an ASAP 2020 (a product name, manufactured by Micromeritics Instrument Corporation).

### (Example 1)

Using 4-methylstyrene and p-divinylbenzene in a ratio of 54:46 as monomers, a mixed solution of toluene and isooctane (toluene:isooctane = 78:22) was added as a diluent to the monomers in an amount of 42% by mass, thus preparing an oil layer (oil phase, a mixed solution of monomers and diluent). Using a 2% by mass aqueous solution of polyvinyl alcohol as a dispersant, the oil layer was used to conduct a polymerization by the microchannel method (an emulsion polymerization method). In the microchannel method, a microchannel emulsification device (manufactured by EP Tech Co., Ltd.) was used. As a result, a styrene-divinylbenzene copolymer (particles) having a volume average particle size of 2.4 µm, an identity coefficient of 1.05, an amount of fine particles having a particle size of 1 µm or less that was less than the detection limit (0.05% by volume), and an average pore size of 4 nm was obtained.

Using the thus obtained styrene-divinylbenzene copolymer, a stainless steel housing (manufactured by Sugiyama Shoji Co., Ltd.) having an inner diameter of 4.6 mm and a length of 150 mm was packed with the obtained copolymer at a packing pressure of 40 MPa by passing a mixed solution of toluene:methanol = 80:20 (mass ratio) through the housing.

### (Example 2)

Using the same oil layer and dispersant as Example 1, but by performing the polymerization by the microchannel method using different conditions for the device described in Example 1, a styrene-divinylbenzene copolymer (particles) having a volume average particle size of 3.4 µm, an identity coefficient of 1.05, an amount of fine particles having a particle size of 1 µm or less that was less than the detection limit (0.05% by volume), and an average pore size of 4 nm was obtained.

Using the thus obtained styrene-divinylbenzene copolymer, a similar housing to Example 1 was packed with the copolymer at a packing pressure of 30 MPa by passing a mixed solution of toluene:methanol = 80:20 (mass ratio) through the housing.

### (Example 3)

Using 4-methylstyrene and p-divinylbenzene in a ratio of 54:46 (mass ratio) as monomers, a mixed solution of toluene and isooctane was added as a diluent to the monomers in an amount of 51% by mass to prepare an oil layer. Using a 2% by mass aqueous solution of polyvinyl alcohol as a dispersant, a polymerization was performed by the microchannel method in the same manner as Example 1, thus obtaining a styrene-divinylbenzene copolymer (particles) having a volume average particle size of 3.4 µm, an identity coefficient of 1.05, an amount of fine particles having a particle size of 1 µm or less that was less than the detection limit (0.05% by volume), and an average pore size of 50 nm.

Using the thus obtained styrene-divinylbenzene copolymer, packing was performed using the same housing and packing conditions as Example 2.

### (Example 4)

Using a mixture of the particles of the styrene-divinylbenzene copolymers obtained in Examples 2 and 3 as the crosslinked polymer particles, with 40% by mass of the particles of Example 2 and 60% by mass of the particles of Example 3, packing was performed using the same housing and packing conditions as Example 2.

### (Comparative Example 1)

Using 4-methylstyrene and p-divinylbenzene in a ratio of 54:46 (mass ratio) as monomers, a mixed solution of toluene and isooctane was added as a diluent to the monomers in an amount of 42% by mass to prepare an oil layer. Using the same amounts of the oil layer and the dispersant as used in Example 1, and using a 2% by mass aqueous solution of polyvinyl alcohol as a dispersant, a polymerization was performed by a suspension polymerization method using the oil layer. By subsequently performing a classification, a styrene-divinylbenzene copolymer (particles) having a volume average particle size of 3.4 µm, an identity coefficient of 1.18, an amount of fine particles having a particle size of 1 µm or less of 1% by volume, and an average pore size of 50 nm was obtained.

Using the thus obtained styrene-divinylbenzene copolymer, packing was performed using the same housing and packing conditions as Example 2.

### (Comparative Example 2)

Using 4-methylstyrene and p-divinylbenzene in a ratio of 54:46 (mass ratio) as monomers, a mixed solution of toluene and isooctane was added as a diluent to the monomers in an amount of 42% by mass to prepare an oil layer. Using the same amounts of the oil layer and the dispersant as used in Example 1, and using a 2% by mass aqueous solution of polyvinyl alcohol as a dispersant, a polymerization was performed by a suspension polymerization method using the oil layer. No subsequent classification was performed, yielding a styrene-divinylbenzene copolymer (particles) having a volume average particle size of 3.4 µm, an identity coefficient of 1.25, an amount of fine particles having a particle size of 1 µm or less of 5% by volume, and an average pore size of 50 nm.

Using the thus obtained styrene-divinylbenzene copolymer, packing was performed using the same housing and packing conditions as Example 2.

### (Evaluation of Packed Columns)

For each of the packed columns obtained in the examples and comparative examples, a high-performance liquid chromatography analyzer Nexera-i (manufactured by Shimadzu Corporation) was used to perform a column evaluation, using an ultraviolet detector (UV, wavelength: 254 nm) for the detector. Tetrahydrofuran was used as the mobile phase, the flow rate was set to 0.3 ml/min, and the column temperature was set to 40°C. In terms of measurement samples, evaluation of the packing performance (number of theoretical plates) of the crosslinked polymer particles was performed using dicyclohexyl phthalate, whereas evaluation of polymer sample separation (the molecular weight range across which polymer samples can be measured and the linearity of the calibration curve) was performed using four polystyrene standards (molecular weights: 500, 1,300, 2,900 and 10,000) for Examples 1 and 2, five polystyrene standards (molecular weights: 10,000, 51,000, 127,000, 780,000 and 1,630,000) for Example 3 and Comparative Example 1, and six polystyrene standards (molecular weights: 500, 2,900, 10,000, 51,000, 127,000 and 1,630,000) for Example 4.

The results of evaluating the packed columns of the examples and comparative examples, the column pressure for each column, the elution volume per column before the dicyclohexyl phthalate was detected, the measurable molecular weight range, the linearity (square of R) of the calibration curve, and the number of theoretical plates for dicyclohexyl phthalate are shown in Table 1.

**[Table 1]**

| | Volume average particle size [µm] | Amount of fine particles of 1 µm or less [% by volume] | Identity coefficient | Average pore size [nm] | Column pressure [MPa] | Number of theoretical plates [N/column] | Elution volume per column [ml] | Molecular weight range | Linearity of calibration curve (square of R) |
|---|---|---|---|---|---|---|---|---|---|
| Example 1 | 2.4 | < 0.05% by volume | 1.05 | 4 | 4.2 | 13047 | 1.55 | 500 to 10,000 | 0.998 |
| Example 2 | 3.4 | < 0.05% by volume | 1.05 | 4 | 2.4 | 11673 | 1.4 | 500 to 10,000 | 0.9923 |
| Example 3 | 3.4 | < 0.05% by volume | 1.05 | 50 | 3.5 | 9812 | 1.76 | 2,900 to 1,636,000 | 0.9961 |
| Example 4 | 3.4 | < 0.05% by volume | 1.05 | 32 | 3.1 | 13429 | 1.64 | 500 to 1,636,000 | 0.9944 |
| Comparative Example 1 | 3.4 | 1% by volume | 1.18 | 50 | 3.6 | 5502 | 1.77 | 500 to 1,636,000 | 0.9933 |
| Comparative Example 2 | 3.4 | 5% by volume | 1.25 | 50 | Pressure loading was high, and packing was not possible | | | | |

As is evident from the results in Table 1, each of the packed columns of Examples 1 to 4 exhibited an elution volume per column of not more than 2.0 ml before the dicyclohexyl phthalate was eluted, and enabled polymer samples having a broad molecular weight range to be measured with a single column. Further, the linearity (square of R) of the calibration curve in the molecular weight range across which polymer samples could be measured was a favorable result of 0.99 or higher. Further, the number of theoretical plates (N) was at least 9,800 plates/column.

On the other hand, in the results of evaluating the packed column of Comparative Example 1, the elution volume per column before the dicyclohexyl phthalate was eluted was not more than 2.0 ml, and the linearity (square of R) of the calibration curve in the molecular weight range across which polymer samples could be measured was also a favorable result of 0.99 or higher. However, the number of theoretical plates (N) was 5502 plates/column, and displayed a significant decrease. This decrease in the number of theoretical plates has relation to a deterioration in the peak shapes of polymer samples and a deterioration in the separation, which are undesirable in terms of conducting high-speed analysis.

Furthermore, an attempt was made to pack the particles of Comparative Example 2 into a column, but because the pressure loading was too high, the mixed solution of toluene:methanol = 80:20 (mass ratio) could not be passed through the column, making packing impossible.

### (Example 5)

### (Evaluation of High-Speed Analysis)

Using the packed column of Example 4, only the flow rate was altered to 1.5 ml/min, and seven polystyrene standards (molecular weights: 500, 1,300, 2,900, 10,000, 127,000, 780,000 and 1,630,000) were measured.

These chromatograms (overwritten) are illustrated in FIG. 2. It was confirmed that the polystyrene standards were able to be eluted favorably within 1.2 minutes.

Further, the calibration curve for these standards is shown in FIG. 3. The linearity (square of R) of the calibration curve was also a favorable value of 0.9956.

### INDUSTRIAL APPLICABILITY

The present invention can provide a liquid chromatography packing material which uses crosslinked polymer particles that combine a broad molecular weight measurement range, favorable chemical stability, a small particle size, and favorable particle size uniformity.

The liquid chromatography packing material, the liquid chromatography packed column, and the liquid chromatography analysis method of the present invention exhibit excellent separation performance, withstand pressure and flow velocity resistance, particularly in ultra-high-performance liquid chromatographs using size exclusion chromatography. As a result, the present invention is useful in the field of analyzing polymer samples such as industrial polymer materials, polymeric additives and biopolymers.

### DESCRIPTION OF THE REFERENCE SIGNS

1: Peak of polystyrene having molecular weight of 1,630,000
2: Peak of polystyrene having molecular weight of 780,000
3: Peak of polystyrene having molecular weight of 127,000
4: Peak of polystyrene having molecular weight of 10,000
5: Peak of polystyrene having molecular weight of 2,900
6: Peak of polystyrene having molecular weight of 1,300
7: Peak of polystyrene having molecular weight of 500

## Claims

1. A liquid chromatography packing material that uses crosslinked polymer particles, wherein a volume average particle size of the crosslinked polymer particles is at least 2 µm but not more than 10 µm,
an amount of fine particles having a particle size of 1 µm or less among the crosslinked polymer particles is less than 1% by volume, and
an identity coefficient (75%/25% ratio of particle total volume) in a particle size distribution is not more than 1.15.

2. The liquid chromatography packing material according to Claim 1, wherein an average pore size of the crosslinked polymer particles is at least 1 nm but not more than 60 nm.

3. The liquid chromatography packing material according to Claim 1 or 2, wherein the crosslinked polymer particles are composed of a styrene-divinylbenzene copolymer.

4. A liquid chromatography packed column comprising the liquid chromatography packing material according to any one of Claims 1 to 3, wherein the packing material is packed in a liquid chromatography housing.

5. The liquid chromatography packed column according to Claim 4, wherein the housing of the liquid chromatography packed column has an inner diameter of not more than 8.0 mm and a length of not more than 300 mm.

6. A liquid chromatography analysis method that uses the liquid chromatography packed column according to Claim 4 or 5.

7. The liquid chromatography analysis method according to Claim 6, wherein a separation mode for the liquid chromatography analysis method is size exclusion chromatography for analyzing a polymer sample.

8. The liquid chromatography analysis method according to Claim 6 or 7, wherein during size exclusion chromatography using the liquid chromatography analysis method, a molecular weight range of a polymer sample that represents an analysis target is at least 100 but not more than 5,000,000 (polystyrene-equivalent values).

9. The liquid chromatography analysis method according to any one of Claims 6 to 8, wherein during size exclusion chromatography using the liquid chromatography analysis method, an elution volume of a mobile phase containing a polymer sample (a product of a polymer sample retention time (units: minutes) and a mobile phase flow rate (units: ml/minute)) is not more than 2.0 ml per column.

10. The liquid chromatography analysis method according to any one of Claims 6 to 9, wherein during size exclusion chromatography using the liquid chromatography analysis method, the mobile phase is at least one compound selected from the group consisting of tetrahydrofuran, chloroform, dichloromethane, dimethylformamide, dimethylacetamide, benzene, toluene, p-xylene, o-dichlorobenzene, trichlorobenzene, acetone, methyl ethyl ketone, dimethyl sulfoxide, and N-methylpyrrolidone.

11. The liquid chromatography analysis method according to any one of Claims 6 to 10, wherein during size exclusion chromatography using the liquid chromatography analysis method, a flow rate of a mobile phase is from 0.3 to 3.0 ml/min.

12. The liquid chromatography packing material according to any one of Claims 1 to 3, wherein
the identity coefficient in the particle size distribution represents
a ratio of an equivalent circle diameter of a crosslinked polymer particle corresponding with 75% by volume relative to an equivalent circle diameter of a crosslinked polymer particle corresponding with 25% by volume, wherein the ratio is obtained when
a two-dimensional particle image is obtained by capturing an image of the crosslinked polymer particles using a particle size distribution measurement device,
an equivalent circle diameter of each particle is obtained from the image,
a volume of each particle is then calculated from the equivalent circle diameter, and
all of the crosslinked polymer particles used in the calculation are arranged in order of volume from smallest to largest to obtain the ratio.
